# EUROPEAN PATENT APPLICATION

(11) **EP 1 708 525 A1**
(43) Date of publication of application: **04.10.2006**
(21) Application number: 05102553.4
(22) Date of filing: 31.03.2005
(51) Int. Cl.: H04Q 7/38, H04L 29/06

(54) **Roaming Profiles for Wireless Devices**

(71) Applicant: Research In Motion Limited, Waterloo, Ontario N2L 3W8 (CA)
(72) Inventor: Smith, Christopher, L7R 2P3, Burlington, (CA)
(74) Representative: Rickard, David John

(57) **Abstract**

A method in a provisioning system for provisioning a wireless device, the method comprising: receiving from the wireless device information for identifying a current network of operation for the wireless device; identifying one or more services with the current network; and, transmitting to the wireless device provisioning information for the one or more services.

## Description

This invention relates to the field of service provisioning for wireless devices, and more specifically, to provisioning of wireless devices using information for identifying a current network of operation for the wireless device.

Current wireless mobile communication devices include microprocessors, memory, soundcards, and run one or more software applications. Examples of software applications used in these wireless devices include micro-browsers, address books, email clients, and wavetable instruments. Additionally, wireless devices have access to a plurality of services via the Internet. A wireless device may, for example, be used to browse web sites on the Internet, to transmit and receive graphics, and to execute streaming audio and/or video applications. The transfer of Internet content to and from wireless device is typically facilitated by the Wireless Application Protocol ("WAP"), which integrates the Internet and other networks with wireless network platforms.

Before a consumer can use a wireless device, a number of parameters must be provisioned into the wireless device in order to enable communication services and applications and in order to distinguish the wireless device from others within the communications network. Provisioning may typically include programming the wireless device with a telephone number and programming the wireless network with the serial number and telephone number of the wireless device. Thus programmed, the wireless device and wireless network are enabled to carry calls between the wireless device and the public switched telephone network ("PSTN"). Provisioning may also include programming the wireless network and wireless device to support one or more optional features for the wireless device, such as call forwarding, three-way calling, voice messaging, short messaging, email forwarding, and paging.

Traditionally, provisioning of a wireless device has been performed on the premises of the vendor or distributor of the wireless device. A data port on the wireless device is used to connect the device to a programming system that uploads provisioning data into the wireless device, such as the telephone number assigned to the wireless device, in order to program it for use on the wireless network. Alternatively, the wireless device is programmed through its key pad. This approach requires the often undesirable step of provisioning the wireless device before it can be delivered to a subscriber.

The ability to deliver a wireless device directly to a subscriber without first having to provision the wireless device provides improved speed of delivery to the subscriber and a simplified provisioning process. As such, wireless service providers can sell their wireless devices directly to potential subscribers through, for example, display booths in supermarkets and department stores.

To facilitate such direct sales to potential subscribers, and to make wireless services as convenient and as affordable as possible, over-the-air ("OTA") service provisioning was introduced. In OTA provisioning, simple instructions are provided to guide the buyer through the process of activating the wireless device and signing up for wireless services to become a subscriber. For example, the buyer can activate a new wireless device and sign up for service by dialling a predetermined number (e.g., "*228xx") in accordance with the wireless device's instructions. Dialling the predetermined number on the wireless device keypad automatically initiates a special purpose call that connects the buyer to an operator. The operator requests certain account information from the buyer, such as personal information, a credit card number, and a home billing address. When the account information is collected and the account is set up, the operator instructs the buyer to enter a sequence of passwords, code numbers, menu-selected commands, etc., that enable certain functions in the wireless device.

To automate service provisioning even further, service provisioning solutions now allow at least part of the OTA service provisioning process to be performed by accessing a provisioning server from an unprovisioned wireless device via an Internet connection. Using an Internet connection allows a wireless service provider to consolidate service provisioning applications and data in a central repository.

In addition to provisioning the wireless device, it is also necessary to provision elements in the wireless communications network which are responsible for effecting mobile communications services and applications (e.g., billing plan, voice mail, call forwarding, email, information services, etc.). These elements include servers and other network devices maintained by wireless carriers, service providers ("SPs"), value added resellers ("VARs"), and mobile virtual network operators ("MVNOs").

A wireless carrier or wireless network operator typically owns and operates a wireless network including radio equipment, base stations, antennae, interface equipment, servers, associated landlines, etc. A carrier also manages basic billing and other back-end services needed to sell wireless services to subscribers. The carrier may sell wireless services directly to subscribers in which case the carrier is also a SP. The carrier may also partner with a VAR, a form of SP who sells the carrier's services and may also provide certain additional services. In addition, the carrier may sell otherwise unused network capacity to one or more MVNOs. A MVNO is a SP that does not maintain its own wireless network (i.e., radio equipment). MVNOs may include large retailers, cable operators, and consumer goods companies with important brands. Unlike SPs and VARs, MVNOs offer their own unique content or marketing cachet to subscribers and often serve specific target markets or interests. MVNOs enable carriers to attract new market segments and thereby load their networks more fully. Carriers can devolve marketing, sales, billing, customer relations, and related front and back office functions to MVNOs who may provide these functions more efficiently for their target markets than can the carriers themselves. Thus, SPs, VARs, and MVNOs have similar and often overlapping roles.

One shortcoming of present provisioning systems is that they do not focus on the location of wireless devices. Nor do they address the increase in the number of subscribers who routinely travel or "roam" with their wireless devices. Roaming is the use of a wireless device outside of the carrier's (or other SP's) local coverage area or home calling area. The local coverage area may be a city, a geographic region, a multi-state area, or a whole country. Roaming arrangements between carriers allow subscribers to use other carriers' networks. Carriers typically charge a higher per-minute fee for calls placed while roaming. In particular, present provisioning systems do not provide for the effective control of access and services based on the geographic location of a subscriber's wireless device.

A need therefore exists for an improved method and system of provisioning wireless devices. Accordingly, a solution that addresses, at least in part, the above and other shortcomings is desired.

According to one aspect of the invention, there is provided a method in a provisioning system for provisioning a wireless device based upon a current network of operation for the wireless network, the current network having one or more services provisioned for use by the wireless device, the method comprising: receiving information from the wireless device for identifying the current network of operation for the wireless device, and identifying the one or more services that are provisioned for use by the wireless device on the current network based upon the information from the wireless device, and transmitting to the wireless device provisioning information for the one or more services.

Preferably, the method further includes comparing the current network with information pertaining to a home network for the wireless device to determine if the wireless device has roamed away from a coverage area of the home network. Preferably, the method further includes receiving from a user of the wireless device instructions for defining the provisioning information. Preferably, the method further includes receiving the instructions from a remote system, wherein the instructions are received at the remote system from the user and wherein the remote system provides the one or more services to the user. Preferably, the method further includes, in response to the comparing, transmitting to the remote system a message indicating that the wireless device has roamed away from the coverage area of the home network. Preferably, the method further includes providing a web site for receiving the instructions. Preferably, the one or more services is one or more options for one or more services. Preferably, the one or more services includes an electronic mail service. Preferably, the information for identifying the current network of operation for the wireless device includes at least one of a mobile country code (MCC), a mobile network code (MNC), a home system identification (Home SID), a current system identification (SID), an international mobile subscriber identity (IMSI), an integrated circuit card identifier (ICCID), an international mobile equipment identity (IMEI), an electronic serial number (ESN), and a mobile station integrated services digital network (MSISDN) number.

In accordance with further aspects of the present invention there is provided an apparatus such as a provisioning system, a method for adapting this system, a computer program product, as well as articles of manufacture such as a computer readable medium having program instructions recorded thereon for practising the method of the invention.

### BRIEF DESCRIPTION OF THE DRAWINGS

Further features and advantages of the embodiments of the present invention will become apparent from the following detailed description, taken in combination with the appended drawings, in which:

FIG. 1 is a block diagram illustrating a provisioning system adapted for implementing an embodiment of the invention;

FIG. 2 is a block diagram illustrating a wireless device and a wireless network adapted for implementing an embodiment of the invention;

FIG. 3 is a block diagram illustrating a memory of the wireless device of FIG. 2;

FIG. 4 is a block diagram illustrating a wireless network environment and data flows within the environment in accordance with an embodiment of the invention; and,

FIG. 5 is a flow chart illustrating operations of modules within a provisioning system for provisioning a wireless device in accordance with an embodiment of the invention.

It will be noted that throughout the appended drawings, like features are identified by like reference numerals.

### DETAILS

The following detailed description of the embodiments of the present invention does not limit the implementation of the invention to any particular computer programming language. The present invention may be implemented in any computer programming language provided that the operating system ("OS") provides the facilities that may support the requirements of the present invention. A preferred embodiment is implemented in the JAVA™ computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the present invention.

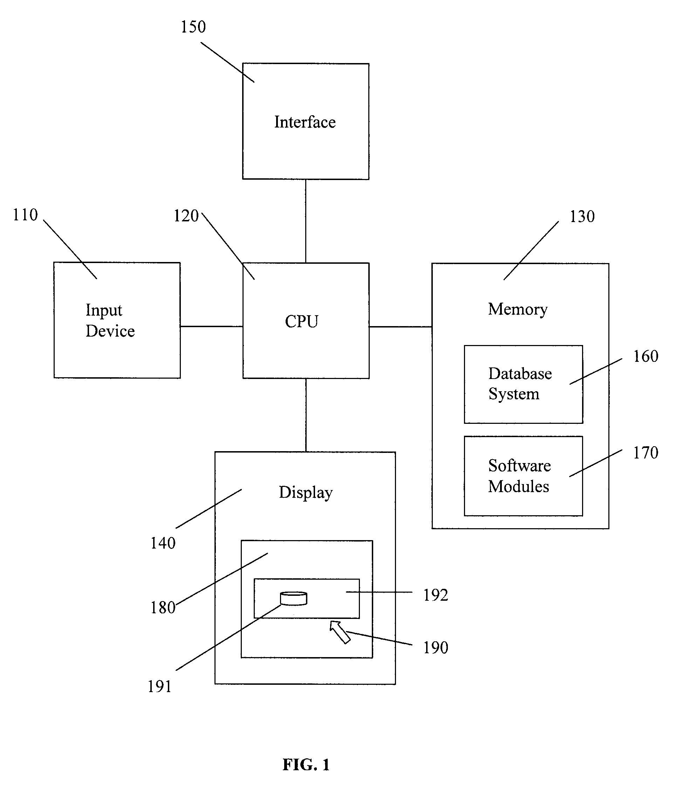

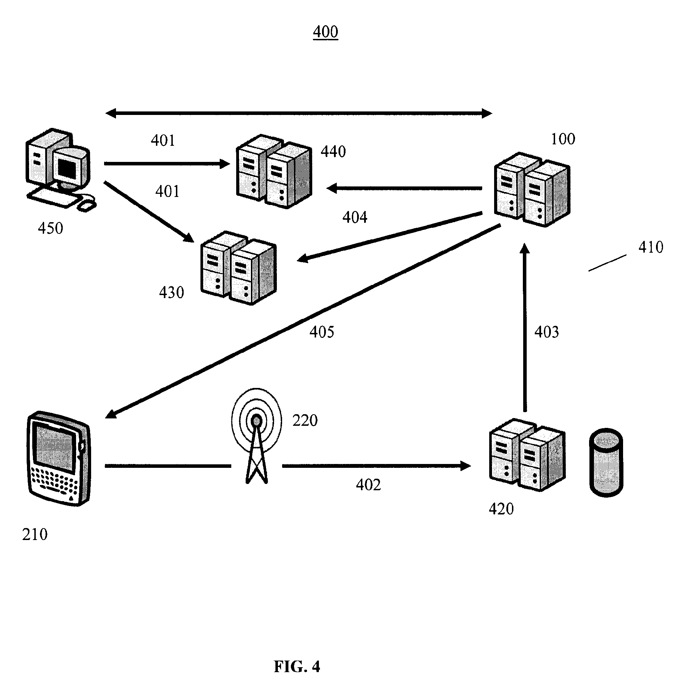

FIG. 1 is a block diagram illustrating a provisioning system 100 adapted for implementing an embodiment of the invention. The provisioning system 100 includes an input device 110, a central processing unit or CPU 120, memory 130, a display 140, and an interface 150. The input device 110 may include a keyboard, mouse, trackball, remote control, or similar device. The CPU 120 may include dedicated coprocessors and memory devices. The memory 130 may include RAM, ROM, or disk devices. The display 140 may include a computer screen, terminal device, or a hardcopy producing output device such as a printer or plotter. And, the interface 150 may include a network connection including an Internet connection and a wireless network connection. The provisioning system 100 is adapted for communicating with and provisioning wireless devices 210 in a wireless network environment 400 (see FIG. 4).

The provisioning system 100 may be a server system or a personal computer ("PC") system. The CPU 120 of the system 100 is operatively coupled to memory 130 which stores an operating system (not shown), such as IBM Corporation's OS/2™, UNIX, etc., for general management of the system 100. The interface 150 may be used for communicating to external data processing systems through a network (such as the Internet) or wireless network (see FIG. 4). Examples of suitable platforms for the system 100 include iSeries™ servers and ThinkCentre™ personal computers available from IBM Corporation. The system 100 may include application server software (not shown), such as WebLogic® Server available from BEA Systems, Inc., for developing and managing distributed applications.

The provisioning system 100 may include a database system 160 for storing and accessing programming information. The database system 160 may include a database management system ("DBMS") and a database and is stored in the memory 130 of the provisioning system 100. It will be appreciated that the database system 160 may be shipped or installed without the database to or by end users. In general, the DBMS is adapted to read a query generated by the provisioning system 100 in response to a request for information submitted by a user typically through a user interface. The DBMS then executes the query against the database and provides a query result to the provisioning system 100 for presentation to the user. It will be appreciated that the database system 160 may be stored in the memory 130 of the provisioning system 100 or stored in a distributed provisioning system (see FIG. 4).

Examples of suitable DBMSs include the Oracle® and DB2™ Universal Database Management System products available from Oracle Corporation and IBM Corporation, respectively. The DBMS is a software layer interposed between the actual database (i.e., the data as stored for use by the CPU 120 of the system 100) and the users of the system. The DBMS is responsible for handling database transactions thus shielding users from the details of any specific computer hardware or database implementation. Using relational techniques, the DBMS stores, manipulates and retrieves data in the form of table-like relations typically defined by a set of columns or attributes of data types and a set of rows (i.e. records or tuples) of data. The standard database query language for dealing with relational databases implemented by most commercial DBMSs is the Structured Query Language ("SQL").

The provisioning system 100 includes computer executable programmed instructions for directing the system 100 to implement the embodiments of the present invention. The programmed instructions may be embodied in one or more software modules 170 resident in the memory 130 of the provisioning system 100. Alternatively, the programmed instructions may be embodied on a computer readable medium (such as a CD disk or floppy disk) which may be used for transporting the programmed instructions to the memory 130 of the provisioning system 100. Alternatively, the programmed instructions may be embedded in a computer-readable, signal-bearing medium that is uploaded to a network by a vendor or supplier of the programmed instructions, and this signal-bearing medium may be downloaded through the interface 150 to the provisioning system 100 from the network by end users or potential buyers.

The CPU 120 of the system 100 is typically coupled to one or more devices 110 for receiving user commands or queries and for displaying the results of these commands or queries to the user on a display 140. For example, user queries may be transformed into a combination of SQL commands for producing one or more tables of output data which may be incorporated in one or more display pages for presentation to the user. The CPU 120 is coupled to memory 130 for containing programs 170 and data such as base tables or virtual tables such as views or derived tables. As mentioned, the memory 130 may include a variety of storage devices including internal memory and external mass storage typically arranged in a hierarchy of storage as understood to those skilled in the art.

A user may interact with the provisioning system 100 and its software modules 170 using a graphical user interface ("GUI") 180. The GUI 180 may be web-based and may be used for monitoring, managing, and accessing the provisioning system 100. GUIs are supported by common operating systems and provide a display format which enables a user to choose commands, execute application programs, manage computer files, and perform other functions by selecting pictorial representations known as icons, or items from a menu through use of an input or pointing device such as a mouse 110. In general, a GUI is used to convey information to and receive commands from users and generally includes a variety of GUI objects or controls, including icons, toolbars, drop-down menus, text, dialog boxes, buttons, and the like. A user typically interacts with a GUI 180 presented on a display 140 by using an input or pointing device (e.g., a mouse) 110 to position a pointer or cursor 190 over an object 191 and by "clicking" on the object 191.

Typically, a GUI based system presents application, system status, and other information to the user in "windows" appearing on the display 140. A window 192 is a more or less rectangular area within the display 140 in which a user may view an application or a document. Such a window 192 may be open, closed, displayed full screen, reduced to an icon, increased or reduced in size, or moved to different areas of the display 140. Multiple windows may be displayed simultaneously, such as: windows included within other windows, windows overlapping other windows, or windows tiled within the display area.

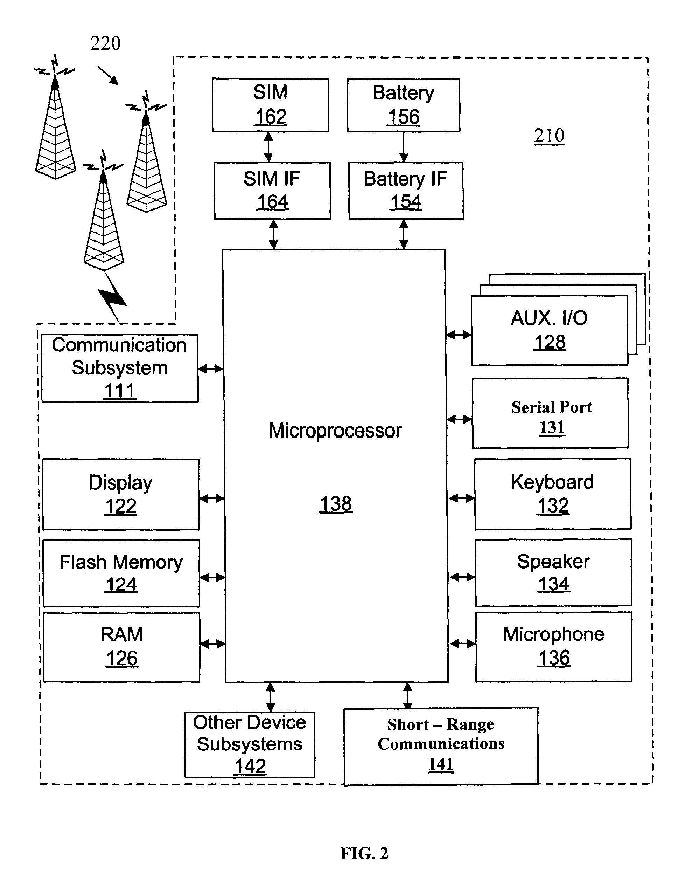

FIG. 2 is a block diagram illustrating a wireless device 210 and a wireless network 220 adapted for implementing an embodiment of the invention. Typically, the wireless device 210 is a handheld device. The wireless network 220 includes antenna, base stations, and supporting radio equipment, known to those of ordinary skill in the art, for supporting wireless communications between the wireless device 210 and the provisioning system 100. The wireless network 220 may be coupled to a wireless network gateway (not shown) and to a wide area network (not shown) to which the provisioning system 100 may be coupled through its interface 150.

The wireless device 210 is a two-way communication device having at least voice and advanced data communication capabilities, including the capability to communicate with other computer systems 100. Depending on the functionality provided by the device 210, it may be referred to as a data messaging device, a two-way pager, a cellular telephone with data messaging capabilities, a wireless Internet appliance, or a data communication device (with or without telephony capabilities). The device 210 may communicate with any one of a plurality of fixed transceiver stations 220 within its geographic coverage area.

The wireless device 210 will normally incorporate a communication subsystem 111, which includes a RF receiver, a RF transmitter, and associated components, such as one or more (preferably embedded or internal) antenna elements, local oscillators ("LOs"), and a processing module such as a digital signal processor ("DSP") (all not shown). As will be apparent to those skilled in field of communications, particular design of the communication subsystem 111 depends on the communication network 220 in which the device 210 is intended to operate.

Network access is associated with a subscriber or user of the device 210 and therefore the device 210 requires a Subscriber Identity Module (or "SIM" card) 162 to be inserted in a SIM interface ("IF") 164 in order to operate in the network. The device 210 is a battery-powered device so it also includes a battery IF 154 for receiving one or more rechargeable batteries 156. Such a battery 156 provides electrical power to most if not all electrical circuitry in the device 210, and the battery IF 154 provides for a mechanical and electrical connection for it. The battery IF 154 is coupled to a regulator (not shown) which provides power to the circuitry of the device 210.

The wireless device 210 includes a microprocessor 138 which controls overall operation of the device 210. Communication functions, including at least data and voice communications, are performed through the communication subsystem 111. The microprocessor 138 also interacts with additional device subsystems such as a display 122, a flash memory 124 or other persistent store, a random access memory ("RAM") 126, auxiliary input/output ("I/O") subsystems 128, a serial port 131, a keyboard 132, a speaker 134, a microphone 136, a short-range communications subsystem 141, and any other device subsystems generally designated at 142. Some of the subsystems shown in FIG. 2 perform communication-related functions, whereas other subsystems may provide "resident" or on-device functions. Notably, some subsystems, such as the keyboard 132 and display 122, for example, may be used for both communication-related functions, such as entering a text message for transmission over a communication network, and device-resident functions such as a calculator or task list. Operating system software used by the microprocessor 138 is preferably stored in a persistent store such as the flash memory 124, which may alternatively be a read-only memory ("ROM") or similar storage element (not shown). Those skilled in the art will appreciate that the operating system, specific device applications, or parts thereof, may be temporarily loaded into a volatile store such as RAM 126.

The microprocessor 138, in addition to its operating system functions, preferably enables execution of software applications on the device 210. A predetermined set of applications which control basic device operations, including at least data and voice communication applications, will normally be installed on the device 210 during its manufacture. A preferred application that may be loaded onto the device 210 may be a personal information manager ("PIM") application having the ability to organize and manage data items relating to the user such as, but not limited to, instant messaging ("IM"), email, calendar events, voice mails, appointments, and task items. Naturally, one or more memory stores are available on the device 210 and SIM 162 to facilitate storage of PIM data items and other information.

The PIM application preferably has the ability to send and receive data items via the wireless network 220. In a preferred embodiment, PIM data items are seamlessly integrated, synchronized, and updated via the wireless network, with the mobile station user's corresponding data items stored and/or associated with a host computer system thereby creating a mirrored host computer on the device 210 with respect to such items. This is especially advantageous where the host computer system 100 is the mobile station user's office computer system. Additional applications may also be loaded onto the device 210 through the network 220, an auxiliary I/O subsystem 128, serial port 131, short-range communications subsystem 141, or any other suitable subsystem 142, and installed by a user in RAM 126 or preferably in a non-volatile store (not shown) for execution by the microprocessor 138. Such flexibility in application installation increases the functionality of the device 210 and may provide enhanced on-device functions, communication-related functions, or both. For example, secure communication applications may enable electronic commerce functions and other such financial transactions to be performed using the wireless device 210.

In a data communication mode, a received signal such as a text message, an email message, or web page download will be processed by the communication subsystem 111 and input to the microprocessor 138. The microprocessor 138 will preferably further process the signal for output to the display 122 and/or to the auxiliary I/O device 128. A user of the wireless device 210 may also compose data items, such as email messages, for example, using the keyboard 132 in conjunction with the display 122 and possibly the auxiliary I/O device 128. The keyboard 132 is preferably a complete alphanumeric keyboard and/or telephone-type keypad. These composed items may be transmitted over a communication network 220 through the communication subsystem 111 or the short range communication subsystem 141.

For voice communications, the overall operation of the wireless device 210 is substantially similar, except that the received signals would be output to the speaker 134 and signals for transmission would be generated by the microphone 136. Alternative voice or audio I/O subsystems, such as a voice message recording subsystem, may also be implemented on the device 210. Although voice or audio signal output is preferably accomplished primarily through the speaker 134, the display 122 may also be used to provide, for example, an indication of the identity of a calling party, duration of a voice call, or other voice call related information.

The serial port 131 shown in FIG. 2 is normally implemented in a personal digital assistant ("PDA")-type communication device for which synchronization with a user's desktop computer is a desirable, albeit optional, component. The serial port 131 enables a user to set preferences through an external device or software application and extends the capabilities of the device 210 by providing for information or software downloads to the device 210 other than through a wireless communication network 220. The alternate download path may, for example, be used to load an encryption key onto the device 210 through a direct and thus reliable and trusted connection to thereby provide secure device communication.

The short-range communications subsystem 141 shown in FIG. 2 is an additional optional component which provides for communication between the device 210 and different systems or devices, which need not necessarily be similar devices. For example, the subsystem 141 may include an infrared device and associated circuits and components, or a Bluetooth™ communication module to provide for communication with similarly-enabled systems and devices. (Bluetooth™ is a registered trademark of Bluetooth SIG, Inc.)

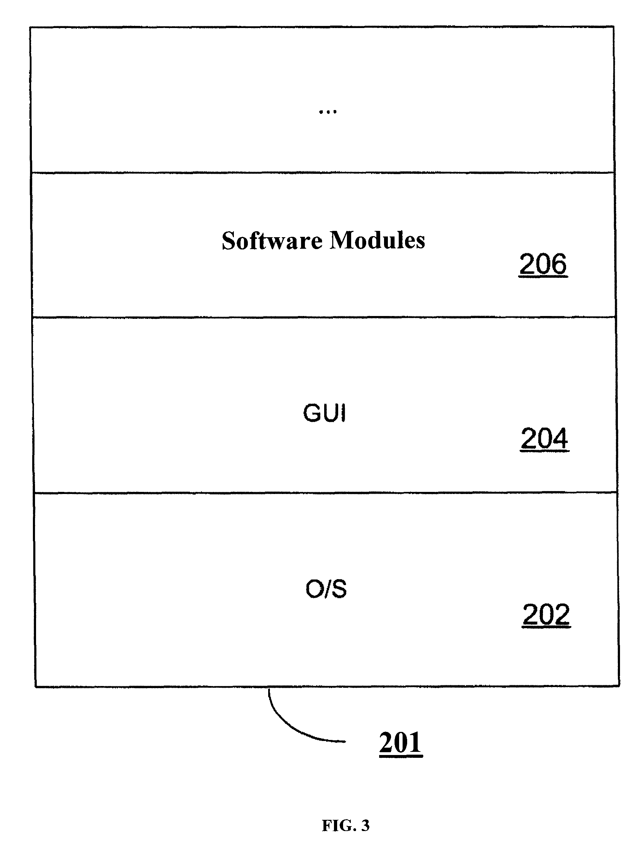

FIG. 3 is a block diagram illustrating a memory 201 of the wireless device 210 of FIG. 2. The memory 201 has various software components for controlling the device 210 and may include flash memory 124, RAM 126, or ROM (not shown), for example. In accordance with an embodiment of the invention, the wireless device 210 is intended to be a multi-tasking wireless communications device configured for sending and receiving data items and for making and receiving voice calls. To provide a user-friendly environment to control the operation of the device 210, an operating system ("O/S") 202 resident on the device 210 provides a basic set of operations for supporting various applications typically operable through a graphical user interface ("GUI") 204. For example, the O/S 202 provides basic input/output system features to obtain input from the auxiliary I/O 108, keyboard 132, and the like, and for facilitating output to the user. In accordance with an embodiment of the invention, there are provided software modules 206 for location based service provisioning as will be described below. Though not shown, one or more applications for managing communications or for providing personal digital assistant like functions may also be included.

Thus, the wireless device 210 includes computer executable programmed instructions for directing the device 210 to implement the embodiments of the present invention. The programmed instructions may be embodied in one or more software modules 206 resident in the memory 201 of the wireless device 210. Alternatively, the programmed instructions may be embodied on a computer readable medium (such as a CD disk or floppy disk) which may be used for transporting the programmed instructions to the memory of the wireless device 210. Alternatively, the programmed instructions may be embedded in a computer-readable, signal-bearing medium that is uploaded to a network by a vendor or supplier of the programmed instructions, and this signal-bearing medium may be downloaded through an interface 111, 131, 141 to the wireless device 210 from the network by end users or potential buyers.

Referring again to FIG. 2, the SIM card 162 is a small, stamp-sized "smart card" that is used in a Global System for Mobile Communications ("GSM") wireless device 210. Typically, the SIM contains a microchip that stores data that identifies the wireless device 210 to a SP (or carrier, etc.). The SIM also stores data used to encrypt voice and data transmissions, phone book information, etc. Typically, the SIM can be removed from a first wireless device and placed in a second wireless device. This enables the second wireless device to use information such as the subscriber's telephone and account numbers. The interface between a SIM and the wireless device 210 within a wireless network 220 is defined in European Telecommunications Standards Institute ("ETSI") standard GSM 11.11 Version 6.2.0 Release 1997 ("Digital Cellular Telecommunications System (Phase 2+); Specification of the Subscriber Identity Module - Mobile Equipment (SIM - ME) Interface"), which is incorporated herein by reference. For example, a SP can be uniquely identified through the Mobile Country Code ("MCC") and Mobile Network Code ("MNC") assigned to the subscriber and stored in the International Mobile Subscriber Identity ("IMSI") file in the SIM of the subscriber's wireless device 210.

The wireless network 220 may include Code-Division Multiple Access ("CDMA"), General Packet Radio Service ("GPRS"), Mobitex, and Motorola's Integrated Digital Enhanced Network ("iDEN") and DataTAC™ networks. Some of these networks may not use a SIM card 162 per se but my use a similar device or software implementation.

FIG. 4 is a block diagram illustrating a wireless network environment 400 and data flows within the environment in accordance with an embodiment of the invention. In FIG. 4, the network environment 400 includes a distributed provisioning system 410, wireless devices 210 used by subscribers, and subscriber systems 450. Note that the subscriber system 450 may be the PC of an individual wireless device user or the server of a carrier or VAR/MVNO/SP. The provisioning system 100 is located within the distributed provisioning system 410 which also includes a registration server/relay database ("DB") system 420, an Internet service system ("BIS") 430, and an enterprise server/mobile data service system ("BES/MDS") 440. The BIS system 420 and/or BES/MDS system 440 may include a customer relationship management ("CRM") database system (not shown). Typically, the BES/MDS system 440 resides in a corporation environment that is being served by the distributed provisioning system 410. Of course, the functionality of the registration server/relay DB system 420, the BIS system 228 and/or BES/MDS system 440, and the CRM database system may be included within the provisioning system 100.

The CRM database system includes servers for storing and accessing subscriber billing, service provider ("SP"), and related information. The CRM database system may include CRM applications and enterprise resource planning ("ERP") applications available from SAP® AG. The CRM database system generates invoice messages for SPs 450 (which may also be individual wireless device users, carriers, VARs, or MVNOs).

The BIS system 430 includes servers for providing an Internet-based email interface for wireless device subscribers. Through the BIS system 430, email is directed to wireless devices 210 over the wireless network 220. The BIS system 430 allows SPs 450 to add email account services for operation through their subscribers' wireless devices 210. Email is redirected wirelessly to subscribers' wireless devices 210 so that subscribers can send, receive, forward, and reply to messages wirelessly. In addition, the BIS system 430 allows individual subscribers to access their email account over the Internet with a landline based PC 450. Each SP 450 may have its own BIS system 228 site (i.e., an "Internet service site") for its subscribers. Services provided by the Internet service site are configurable based on the carrier or VAR/MNVO/SP. Advantageously, and as will be described in more detail below, subscribers are able to manage their roaming profiles and configurations through an Internet service site directly (i.e., via the BIS 430, BES/MDS 440, and/or provisioning system 100). In addition, carriers and VARs/MVNOs/SPs can also access an Internet service site to manage subscriber settings.

The registration server/relay DB system 420 includes servers for transferring information between the provisioning system 100 and wireless devices 210 over the wireless network 220. As discussed above, the wireless network 220 is generally owned and operated by a SP that is a carrier. It is through the registration server/relay DB system 420 that the provisioning system 100 is coupled to the wireless network 220. The registration server/relay DB system 420 handles a variety of low level operations for subscribers 210. The registration server/relay DB system 420 receives registration messages from wireless devices 210 and passes these messages to the provisioning system 100. In return, the provisioning system 100 passes enable/block service access messages to the registration server/relay DB system 420.

Each subscriber system 450 may be similar in component configuration to the provisioning system 100 (see FIG. 1). Using their systems 450, subscribers and SPs can log in via a Web based user interface to the distributed provisioning system 410 to manage provisioning aspects for themselves or for their respective subscribers.

The distributed provisioning system 410 may act as an intermediary between SPs and subscribers' wireless devices 210, providing email forwarding, related billing, provisioning, and other services. In effect, the distributed provisioning system 410 is a form of SP providing specialized support and services for wireless devices 210 such as the BlackBerry® handheld. RIM® presently acts as such a SP providing provisioning and related services through its BlackBerry® service. As such, SPs such as RIM® are sometimes referred to as value added service providers ("VASPs"). Of course, the BlackBerry® service may be rebranded and offered by other SPs to their subscribers. In general, the provisioning system 100, 410 provides a method of controlling access to various services offered by VASPs. The provisioning system 100, 410 is used by SPs to activate/manage/deactivate subscriber services. BlackBerry® service subscribers use the provisioning system 100, 410 for activating and managing services that they have subscribed to. The provisioning system 100, 410 provides the VASP with administrative capabilities for managing these service subscribers. The provisioning system 100, 410 also provides subscriber activation records to the CRM database system for billing purposes, etc. Furthermore, the provisioning system 100, 410 provides external interfaces such as HTML, XML, and WML for SPs to use. Thus, the present invention provides SPs with an increased level of control and management of subscribers' wireless devices 210.

Service access control provides SPs with the ability to manage and control the services their subscribers have access to. By using service access control, subscribers can be limited to a particular service, regardless of the wireless device 210 they are using. SPs manage their profile and default settings through their subscriber systems 450 which include web interfaces to the provisioning system 100, 410. Interfaces are provided to allow for the management of service setting profiles and for the configuration of service conflict override rules. Override rules are used to automatically resolve service conflicts between subscribers and wireless devices when a manual override is not specified. Override rules can be specified at the subscriber or wireless device level or at the individual service level.

The present invention allows subscribers to control their roaming profiles directly through the distributed provisioning system 100, 410. In addition, the present invention extends the ability for SPs to control access to services. According to one embodiment of the invention, this is accomplished using carrier/network identification information to identify the location of wireless devices 210 within the network environment 400.

The carrier/network identification information or Network Provider Code ("NPC") may include, for each of the home area and current area of the wireless device, a network identifier which identifies the network type (e.g., CDMA, GPRS, iDEN, Moditex, DataTAC, etc.) and a carrier identifier which identifies the carrier. For GPRS and iDEN networks, which are GSM based, the carrier identifier may include the MNC and MCC. For CDMA networks, the home system identification ("Home SID") and the current system identification ("SID") may be used to identify the carrier. Alternatively, the NPC may also include the wireless device's international mobile subscriber identity ("IMSI"), integrated circuit card identifier ("ICCID"), international mobile equipment identity ("IMEI"), electronic serial number ("ESN"); and/or mobile station integrated services digital network ("MSISDN") number.

The registration server/relay DB system 420 is able to determine the network type for each registration packet. It provides an interface to the provisioning system 100, 410 to block registration flow on a per network or carrier basis. The registration interface of the provisioning system 100, 410 is able to determine the SP for every valid registration and is able to discard a registration on a per SP basis.

The provisioning system 100, 224 supports the creation of "geographic service profiles" so that subscribers and SPs can define the services they want their wireless devices 210 to be granted by default when their wireless devices 210 register with the provisioning system 100, 410. Subscribers and SPs can set-up exactly what services they would like their wireless devices 210 to be granted or denied based on the geographic location of the wireless devices 210. This is enforced by the provisioning system 100, 410 as soon as registration takes place.

Subscribers and SPs have the ability to activate specific services for their wireless devices as part of their own provisioning process. Access control and billing of services may be tied together to ensure accurate accounting for all services. A database table 160 maintains mappings of service "CLASSMASKs" that are used to identify certain classes of service in an efficient manner as each packet of data flows through the provisioning system 100, 410. A bit-wise comparison may be performed to quickly determine if access to a specific service has been granted.

The provisioning system 100, 410 maintains a database 160 of default service assignments for all wireless devices 210 and applies the appropriate service CLASSMASK to data flowing through the provisioning system 100, 410 and relating to the wireless device as soon as a recognized wireless device registers.

The provisioning system 100, 410 provides a means to identify the wireless device type (based on pre-activation or service assignment) and ensure that only certain services are accessible by that wireless device by setting and communicating a CLASSMASK to elements of the provisioning system 100, 410. Once the CLASSMASK has been set, fraudulent use of unauthorized services becomes impossible. The provisioning system 100, 410 provides interfaces for allowing a subscriber or SP to change the service profile for a particular wireless device 210 to allow access to a desired service (perhaps after a premium is paid).

Thus, according to one embodiment of the invention, the provisioning system 100 (or distributed provisioning system 410) uses NPC information contained in registration packets to allow for the identification of a subscriber or wireless device 210 as belonging to a specific network and/or carrier and hence geographic location or region. Subscribers and SPs are able to control what services can be assigned to their wireless devices 210 based on the current geographic location or region of these wireless devices 210 as determined from the NPC information. Different geographic regions can have different service offerings and different configuration options for branding applications. Based on NPC information, subscribers' wireless devices 210 are provided with specific, configurable service books (i.e., for WAP, browsing, etc.). In addition to this service assignment, aspects of individual services (e.g., options, email signatures, out-of-office messages, default settings, routing instructions, filters, etc.) may also be based on NPC information.

For example, available BlackBerry@ services include the "enterprise" and "prosumer" services. The enterprise service does not use a handheld-based provisioning model. Rather, enterprise service subscribers have their email service enabled through their IT department. Wireless devices 210 that are assigned to the enterprise service type are not provided with any handheld-based provisioning methods during activation. On the other hand, prosumer service uses a handheld-based provisioning model, providing an easy to use method for subscribers to set-up their email service. Wireless devices 210 that are assigned to the prosumer service type are provided with the handheld-based provisioning model as configured by the SP at time of wireless device activation. With respect to subscriber service access control, SPs are able to submit to the provisioning system 100, 410 during the subscriber provisioning process which service type (e.g., enterprise) a subscriber has access to for a given geographic location or region. Once assigned, the subscriber will not have access to any other service type (e.g., prosumer) for that given geographic location or region. The subscriber service type assignment can be changed at any time using the provisioning system 100, 410 (via HTML or XML).

Of course other location based services, such as Global Positioning System ("GPS") based services, may be provisioned in addition to enterprise and prosumer services.

FIG. 4 also illustrates data flows within the network environment 400 for location based service provisioning in accordance with an embodiment of the invention. These data flows or steps are described in the following.

At step 401, a subscriber or SP 450 provisions "roaming profiles" on the BES/MDS 440, the BIS 430 , or provisioning system 100 using Web, desktop or device-based interfaces. Roaming profiles can be based on geographic location or region, country, or even carrier within a country. These profiles operate similar to regular filters with more targeted options. For example, the roaming profiles may include an enterprise service profile for use when the wireless device 210 is operating in its home network (or geographic region) and a prosumer service profile for use when the wireless device 210 is operating in a network (or geographic region) that is other than its home network.

At step 402, a registration packet is sent from the wireless device 210 over the wireless network 220 to the registration server/relay DB 420 each time the device roams to another network or returns to its home network. The registration packet includes NPC information.

At step 403, the registration server/relay DB 420 notifies the provisioning system 100 of the roaming activity of the wireless device 210. Based on NPC information included in the registration packet, the provisioning system 100 can determine what country and network the wireless device 210 is currently operating in as well as the home network of the device 210.

At step 404, the provisioning system 100 notifies the BES/MDS 440 and/or BIS 430 of the roaming activity of the wireless device 210 or the return of the wireless device 210 to its home network.

At step 405, the provisioning system 100 (or the BES/MDS 440 or the BIS 430) notifies the wireless device 210 as to what roaming profile is to be used. The SP 450 (e.g., subscriber) has the ability to manually override this service provisioning through Web or wireless device-based interfaces. The provisioning system 100 sends a service book (or profile) to the wireless device 210 which contains configuration settings for all services (e.g., enterprise services or prosumer services) to be enabled for that device based on its current network or geographic region.

Alternatively, the roaming information is pushed down to the BES/MDS 440 or the BIS 430 and the appropriate profile is invoked at this service level to control options on behalf of the subscriber. In this case, a service record may be pushed down to the wireless device 210. For example, the provisioning system 100 may deliver a "roaming event" 404 to another system, such as the BES/MDS 440 or the BIS 430, that would be used by that system to adjust the service of the roaming subscriber. Consider the following example. First, a subscriber configures 401 their messaging service to only send high-priority messages when they are outside of the United States and Canada. Second, the subscriber configures 401 their calendar service to adjust working hours based on the time-zone associated with their current location. Third, the subscriber travels to the United Kingdom. Forth, the provisioning system 100 receives 402, 403 a registration packet from the registration server/relay DB 420 indicating that the current NPC designates the United Kingdom (e.g., MCC=234). Fifth, the provisioning system 100 delivers 404 a roaming event message to the BIS 430 (or BES/MDS 440) indicating the subscriber's account and current location. And, sixth, the BIS 430 (or BES/MDS 440) implements 405 the roaming profile for the subscriber's wireless device 210. Thus, only high-priority messages are delivered to the subscriber's wireless device 210 and the working hours in the calendar application of the subscriber's wireless device 210 are adjusted without any action on the subscriber's part.

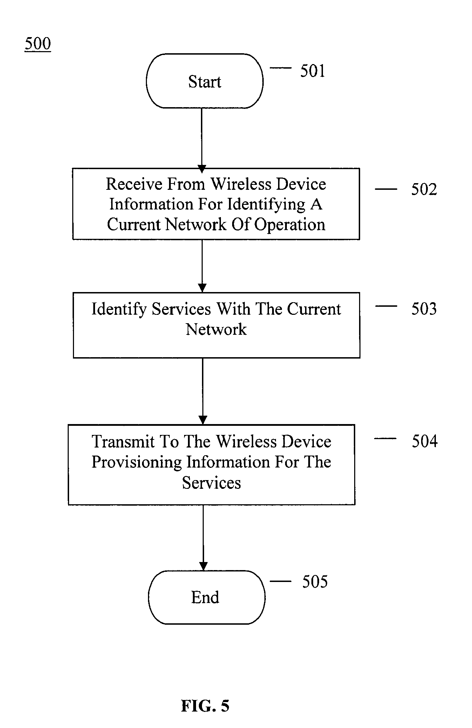

The above described method may be summarized with the aid of a flowchart. FIG. 5 is a flow chart illustrating operations 500 of modules 170 within the provisioning system 100, 410 for provisioning a wireless device 210 in accordance with an embodiment of the invention.

At step 501, the operations 500 start.

At step 502, information for identifying a current network of operation for the wireless device 210 is received 402, 403 at the provisioning system 100, 410 from the wireless device 210.

At step 503, one or more services are identified with the current network.

At step 504, provisioning information for the one or more services is transmitted 405 to the wireless device 210.

At step 505, the operations 500 end.

Preferably, the method further includes comparing the current network with information pertaining to a home network for the wireless device 210 to determine if the wireless device 210 has roamed away from a coverage area of the home network. Preferably, the method further includes receiving 401 at the provisioning system 100, 410 from a user 450 of the wireless device 210 instructions for defining the provisioning information. Preferably, the method further includes receiving 401 the instructions from a remote system 430, 440, wherein the instructions are received at the remote system from the user 450 and wherein the remote system 430, 440 provides the one or more services to the user. Preferably, the method further includes, in response to the comparing, transmitting 404 to the remote system 430, 440 a message indicating that the wireless device 210 has roamed away from the coverage area of the home network. Preferably, the method further includes providing a web site for receiving the instructions. Preferably, the one or more services is one or more options for one or more services. Preferably, the one or more services includes an electronic mail service. Preferably, the information for identifying the current network of operation for the wireless device 210 includes at least one of a mobile country code (MCC), a mobile network code (MNC), a home system identification (Home SID), a current system identification (SID), an international mobile subscriber identity (IMSI), an integrated circuit card identifier (ICCID), an international mobile equipment identity (IMEI), an electronic serial number (ESN), and a mobile station integrated services digital network (MSISDN) number.

The above described method for location based service provisioning is generally performed by the provisioning system 100. However, according to an alternate embodiment of the invention, one or more steps of the method can be performed by the wireless device 210, subscriber system 450, or elements of the distributed provisioning system 410.

While this invention is primarily discussed as a method, a person of ordinary skill in the art will understand that the apparatus discussed above with reference to a wireless device 210 and a provisioning system 100, may be programmed to enable the practice of the method of the invention. Moreover, an article of manufacture for use with a wireless device 210 or provisioning system 100, such as a pre-recorded storage device or other similar computer readable medium including program instructions recorded thereon, may direct the wireless device 210 or provisioning system 100 to facilitate the practice of the method of the invention. It is understood that such apparatus and articles of manufacture also come within the scope of the invention.

The embodiments of the invention described above are intended to be exemplary only. The scope of the invention is therefore intended to be limited solely by the scope of the appended claims.

## Claims

1. A method in a provisioning system for provisioning a wireless device, the method comprising:
receiving from the wireless device information for identifying a current network of operation for the wireless device;
identifying one or more services with the current network; and,
transmitting to the wireless device provisioning information for the one or more services.

2. The method of claim 1 further comprising:
comparing the current network with information pertaining to a home network for the wireless device to determine if the wireless device has roamed away from a coverage area of the home network.

3. The method of claim 1 or claim 2 further comprising:
receiving from a user of the wireless device instructions for defining the provisioning information.

4. The method of claim 3 further comprising:
receiving the instructions from a remote system, wherein the instructions are received at the remote system from the user and wherein the remote system provides the one or more services to the user.

5. The method of claim 4 further comprising:
in response to the comparing, transmitting to the remote system a message indicating that the wireless device has roamed away from the coverage area of the home network.

6. The method of claim 4 or claim 5 further comprising:
providing a web site for receiving the instructions.

7. The method of any one of claims 1 to 6, wherein the one or more services is one or more options for one or more services.

8. The method of any one of claims 1 to 6, wherein the one or more services comprises an electronic mail service.

9. The method of any one of claims 1 to 8, wherein the information for identifying the current network of operation for the wireless device comprises any one or any combination of:
a mobile country code (MCC);
a mobile network code (MNC);
a home system identification (Home SID);
a current system identification (SID);
an international mobile subscriber identity (IMSI);
an integrated circuit card identifier (ICCID);
an international mobile equipment identity (IMEI);
an electronic serial number (ESN); and/or,
a mobile station integrated services digital network (MSISDN) number.

10. A system for provisioning a wireless device, the system coupled to a wireless network by an interface, the system comprising:
a processor coupled to memory and the interface and adapted to:
receive from the wireless device information for identifying a current network of operation for the wireless device;
identify one or more services with the current network; and,
transmit to the wireless device provisioning information for the one or more services.

11. The system of claim 10, wherein the processor is further adapted to compare the current network with information pertaining to a home network for the wireless device to determine if the wireless device has roamed away from a coverage area of the home network.

12. The system of claim 10 or claim 11, wherein the processor is further adapted to receive from a user of the wireless device instructions for defining the provisioning information.

13. The system of claim 12, wherein the processor is further adapted to receive the instructions from a remote system, wherein the instructions are received at the remote system from the user and wherein the remote system provides the one or more services to the user.

14. The system of claim 13, wherein the processor is further adapted to, in response to the compare, transmit to the remote system a message indicating that the wireless device has roamed away from the coverage area of the home network.

15. The system of claim 13 or claim 14, wherein the processor is further adapted to provide a web site for receiving the instructions.

16. The system of any one of claims 10 to 15, wherein the one or more services is one or more options for one or more services.

17. The system of any one of claims 10 to 15, wherein the one or more services comprises an electronic mail service.

18. The system of any one of claims 10 to 17, wherein the information to identify the current network of operation for the wireless device comprises any one or any combination of:
a mobile country code (MCC);
a mobile network code (MNC);
a home system identification (Home SID);
a current system identification (SID);
an international mobile subscriber identity (IMSI);
an integrated circuit card identifier (ICCID);
an international mobile equipment identity (IMEI);
an electronic serial number (ESN); and/or,
a mobile station integrated services digital network (MSISDN) number.

19. A computer program product having a computer readable medium tangibly embodying computer executable code means for directing a provisioning system to provision a wireless device, the computer executable code means when being executed causing said provisioning system to implement the method of any one of claims 1 to 9.

20. A wireless device adapted to receive provisioning information from a provisioning system, said wireless device comprising:
means for transmitting to the provisioning system information for identifying a current network of operation for the wireless device;
means for receiving from the provisioning system provisioning information for one or more services with the current network of operation identified by the provisioning system; and
means for provisioning the identified services in the wireless device using the received provisioning information.

21. A method in a wireless device of provisioning services, comprising:
transmitting to a provisioning system information for identifying a current network of operation for the wireless device;
receiving from the provisioning system provisioning information for one or more services with the current network of operation identified by the provisioning system; and
provisioning the identified services in the wireless device using the received provisioning information.

22. A computer program product having a computer readable medium tangibly embodying computer executable code means for directing a wireless device to provision services within said device, the computer executable code means when being executed causing said provisioning system to implement the method of claim 21.

23. A communications system comprising a provisioning system according to any one of claims 1 to 9 and/or at least one wireless device according to claim 20.

## Amended claims

### Amended claims in accordance with Rule 86(2) EPC.

**1.** A method in a provisioning system for provisioning a wireless device based upon a current network of operation for the wireless network, the current network having one or more services provisioned for use by the wireless device, the method comprising:
receiving information from the wireless device for identifying the current network of operation for the wireless device;
identifying the one or more services that are provisioned for use by the wireless device on the current network based upon the information from the wireless device; and,
transmitting to the wireless device provisioning information for the one or more services.

**2.** The method of claim 1 further comprising:
comparing the current network with information pertaining to a home network for the wireless device to determine if the wireless device has roamed away from a coverage area of the home network.

**3.** The method of claim 1 or claim 2 further comprising:
receiving from a user of the wireless device instructions for defining the provisioning information.

**4.** The method of claim 3 further comprising:
receiving the instructions from a remote system, wherein the instructions are received at the remote system from the user and wherein the remote system provides the one or more services to the user.

**5.** The method of claim 4 further comprising:
in response to the comparing, transmitting to the remote system a message indicating that the wireless device has roamed away from the coverage area of the home network.

**6.** The method of claim 4 or claim 5 further comprising:
providing a web site for receiving the instructions.

**7.** The method of any one of claims 1 to 6, wherein the one or more services is one or more options for one or more services.

**8.** The method of any one of claims 1 to 6, wherein the one or more services comprises an electronic mail service.

**9.** The method of any one of claims 1 to 8, wherein the information for identifying the current network of operation for the wireless device comprises any one or any combination of:
a mobile country code (MCC);
a mobile network code (MNC);
a home system identification (Home SID);
a current system identification (SID);
an international mobile subscriber identity (IMSI);
an integrated circuit card identifier (ICCID);
an international mobile equipment identity (IMEI);
an electronic serial number (ESN); and/or,
a mobile station integrated services digital network (MSISDN) number.

**10.** A wireless device provisioning system configured to provision a wireless device based upon a current network of operation for the wireless network, the current network having one or more services provisioned for use by the wireless device, the system coupled to a wireless network by an interface, the system comprising:
a processor coupled to memory and the interface and adapted to:
receive information from the wireless device for identifying a current network of operation for the wireless device;
identify the one or more services that are provisioned for use by the wireless device on the current network based upon the information from the wireless device; and,
transmit to the wireless device provisioning information for the one or more services.

**11.** The system of claim 10, wherein the processor is further adapted to compare the current network with information pertaining to a home network for the wireless device to determine if the wireless device has roamed away from a coverage area of the home network.

**12.** The system of claim 10 or claim 11, wherein the processor is further adapted to receive from a user of the wireless device instructions for defining the provisioning information.

**13.** The system of claim 12, wherein the processor is further adapted to receive the instructions from a remote system, wherein the instructions are received at the remote system from the user and wherein the remote system provides the one or more services to the user.

**14.** The system of claim 13, wherein the processor is further adapted to, in response to the compare, transmit to the remote system a message indicating that the wireless device has roamed away from the coverage area of the home network.

**15.** The system of claim 13 or claim 14, wherein the processor is further adapted to provide a web site for receiving the instructions.

**16.** The system of any one of claims 10 to 15, wherein the one or more services is one or more options for one or more services.

**17.** The system of any one of claims 10 to 15, wherein the one or more services comprises an electronic mail service.

**18.** The system of any one of claims 10 to 17, wherein the information to identify the current network of operation for the wireless device comprises any one or any combination of:
a mobile country code (MCC);
a mobile network code (MNC);
a home system identification (Home SID);
a current system identification (SID);
an international mobile subscriber identity (IMSI);
an integrated circuit card identifier (ICCID);
an international mobile equipment identity (IMEI);
an electronic serial number (ESN); and/or,
a mobile station integrated services digital network (MSISDN) number.

**19.** A computer program product having a computer readable medium tangibly embodying computer executable code means for directing a provisioning system to provision a wireless device, the computer executable code means when being executed causing said provisioning system to implement the method of any one of claims 1 to 9.

**20.** A wireless device adapted to receive provisioning information from a provisioning system, said wireless device comprising:
means for transmitting to the provisioning system information for identifying a current network of operation for the wireless device;
means for receiving from the provisioning system provisioning information for one or more services with the current network of operation identified by the provisioning system; and
means for provisioning the identified services in the wireless device using the received provisioning information.

**21.** A method in a wireless device of provisioning services, comprising:
transmitting to a provisioning system information for identifying a current network of operation for the wireless device;
receiving from the provisioning system provisioning information for one or more services with the current network of operation identified by the provisioning system; and
provisioning the identified services in the wireless device using the received provisioning information.

**22.** A computer program product having a computer readable medium tangibly embodying computer executable code means for directing a wireless device to provision services within said device, the computer executable code means when being executed causing said provisioning system to implement the method of claim 21.

**23.** A communications system comprising a provisioning system according to any one of claims 1 to 9 and/or at least one wireless device according to claim 20.
